# EUROPÄISCHE PATENTSCHRIFT

(11) **EP 0 818 346 B1**
(45) Veröffentlichungstag und Bekanntmachung des Hinweises auf die Patenterteilung: **24.04.2002**
(21) Anmeldenummer: 97111416.0
(22) Anmeldetag: 05.07.1997
(51) Int. Cl.: B60N 2/28

(54) **Kindersitz, insbesondere Autokindersitz**
Infant seat in particular for automotive vehicles
Siège d'enfants en particulier pour véhicules automobiles

(30) Priorität: 09.07.1996 DE 19627551
(43) Veröffentlichungstag der Anmeldung: 14.01.1998
(73) Patentinhaber: Schräder, Margarete, D-95352 Marktleugast (DE)
(72) Erfinder: Schräder, Margarete, D-95352 Marktleugast (DE)
(74) Vertreter: Tergau, Enno, Dipl.-Ing.

(56) Entgegenhaltungen:
- EP-A- 0 251 242
- EP-A- 0 323 334
- DE-U- 9 102 850
- DE-U- 29 510 642

## Beschreibung

Die Erfindung betrifft einen Autokindersitz zur Halterung auf dem Sitzplatz eines Fahrzeugsitzes mittels eines fahrzeugeigenen Sicherheitsgurtsystems und den weiteren Merkmalen des Oberbegriffs des Anspruches 1 (wie z.B. aus EP 0 323 334 B1 bekannt).

Bei derartigen Systemen wird der Kindersitz durch den Diagonalgurt und/oder den Beckengurt des fahrzeugeigenen Rückhaltesystems am Fahrzeugsitz gehalten. Dieses Rückhaltesystem ist bei modernen Automobilen in der Regel ein Automatikgurt, der mit schon geringer Zugkraft aus seiner Federaufrollung herausgezogen werden kann. Hier ist zu besorgen, daß das im Kindersitz einsitzende Kind unbeobachtet den Gurt des Rückhaltesystems aus seiner Federaufrollvorrichtung herauszieht und dadurch die erforderliche Rückhaltesicherheit nicht mehr gewährleistet ist. Dann liegt nämlich der Gurt nicht mehr mit ausreichender Festigkeit und ausreichender Lagesicherheit am Kindersitz an. Die neuen ECE-Normen verlangen daher eine Positioniersicherung des fahrzeugeigenen Gurtes am Kindersitz, die eine Zugsicherheit von mindestens 36 kg gewährleistet.

Aus EP 0 251 242 B1 sind bereits solche Gurtführungen bekannt, die eine zugsichere Längsfixierung des Gurtes am Sitz gewährleisten. Sie weisen die Form zweier Fuß an Fuß aneinandergesetzter T auf, bei denen die Gurte um die T-Vertikalschenkel herumgelegt sind und durch von den Enden der horizontalen T-Schenkel nach innen abstehende, zu den vertikalen T-Schenkeln parallele Vorsprünge beidseitig vom T-Vertikalsteg zu einer Umlenkung gezwungen werden, so daß der durch dieses Beschlagteil hindurchgezogene Gurt eine 4-fache Umlenkung bzw. Knickung erfährt. Dieses Beschlagteil erfordert jedoch zur Positionierung des Gurtes umständliche und komplizierte Handreichungen.

Eine einfacher bedienbare Vorrichtung zur zugsicheren Längsfixierung eines Autosicherheitsgurtes an einem Autokindersitz ist aus der eingangs genannten EP 0 323 334 bekannt. Hier wird der Sicherheitsgurt in seinem Auflagebereich am Kindersitz durch einen quer zur Gurtlängsrichtung schwenkbaren Fixierriegel unter mehrfacher Umlenkung seines Längsverlaufes in einer in der Auflage angebrachten Querrille eingeklemmt. Diese Fixierung des Gurtes am Autokindersitz ist einfach bedienbar. Die genaue Positionierung der Fixierstelle am Gurt bereitet jedoch Probleme. Weierhin behindert die Positioniersicherung des fahrzeugeigenen Gurtes eine Wirksamkeit der heute in der Regel fahrzeugeigenen Aufrollautomatik in demjenigen Gurtbereich, der an dem im Kindersitz befindlichen Kind anliegt. In diesem Anlagebereich erhält nämlich der Gurt aufgrund seiner Klemmung am Kindersitz die Eigenschaften eines Statikgurtes und dabei ist es erwünscht, die wirksame Gurtlänge so einzustellen, daß dem Kind einerseits eine ausreichende Bewegungsfreiheit verbleibt, andererseits jedoch keine zu große, dem Sicherheitszweck entgegenwirkende Lose vorhanden ist. Der Erfindung liegt daher die Aufgabe zugrunde, einen Kindersitz der eingangs genannten Art so auszugestalten, daß in einfacher Weise die Gurtlose auf die räumlichen Verhältnisse im Anlagebereich am Kind einstellbar ist. Diese Aufgabe wird durch Anspruch 1 gelöst.

Die Erfindung ermöglicht eine Vorpositionierung des Gurtsystems am Kindersitz, bevor der Fixierriegel in seine Fixierstellung überführt wird. Dadurch ist es möglich, den Gurt zunächst in eine Wunschposition am Kindersitz zu bringen, in der er einerseits dem Kind noch genügend Bewegungsspielraum innerhalb des Sitzes gibt, andererseits aber seine Sicherheitsfunktion erfüllt. Nimmt der Gurt die eingestellte Wunschposition ein, so behält er diese Position trotz der Zugwirkung der in der Regel vorhandenen Aufrollautomatik bei. Die Haltekraft der als Positionierhilfe wirksamen Klammerung ist nämlich so dimensioniert, daß sie den von der Aufrollautomatik ausgeübten Zugkräften standhält. Sodann erst wird der Fixierriegel in seine Fixierstellung überführt, in der das Gurtsystem seine Sicherungswirkungen voll auch auf das im Kindersitz einsitzende Kind ausüben kann. Dabei ist die Anordnung des Klammerschenkels so getroffen, daß er in Schließstellung des Fixierriegels abgedeckt und somit nicht vom Kind manipulierbar ist oder Veranlassung zu Verletzungen geben kann. Durch Anspruch 3 bedient sich der Fixierriegel zu seiner vollen Klemmwirksamkeit der Formwirkungen des Klammerschenkels auf den geklemmten Sicherheitsgurt. Das geschieht konstruktiv in der in Anspruch 4-6 niedergelegten Weise.

Anspruch 7 erleichtert das Einführen des Sicherheitsgurtes unter den Klammerschenkel.

Gegenstand des Anspruches 8 ist die konstruktive Befestigung des den Klammerschenkel enthaltenden Beschlagteils am Kindersitz. Durch Anspruch 9 beaufschlagt der Fixierriegel den Klammerschenkel bzw. dessen als Aufnahmemaul hochgebogenes Freiende hebeltechnisch günstig mit seinem der Schwenklagerung naheliegenden Bereich.

Die Verrastung des Fixierriegels am Kindersitz wird zweckmäßig durch ein Federrastgesperre oder -gehemme nach den Ansprüchen 13 bis 15 ermöglicht. Dadurch kann der Fixierriegel leicht durch entsprechende Krafteinwirkung von außen aufgezogen werden. Bei größeren Kindern ist jedoch zu besorgen, daß diese - gegebenenfalls unter Zuhilfenahme eines Werkzeuges - das Rastgehemme öffnen. Um das zu verhindern, ist zusätzlich eine die Federwirkung des Rastgehemmes aufhebende Sicherheitsvorrichtung nach den Ansprüchen 16 bis 18 vorgesehen.

Die Erfindung wird anhand eines in den Figuren dargestellten Ausführungsbeispiels näher beschrieben. Es zeigen:
- Fig. 1: eine perspektivische Ansicht eines Kindersitzes mit anliegendem Gurtsystem und einsitzendem Kind. Darin ist der die Erfindung beinhaltende Teil eingekreist. Es ist dies die am Ende der Nackenstütze befindliche Gurtführung für den Diagonalgurt.
- Fig. 2: eine vergrößerte Darstellung des Kreisbereiches II in Fig. 1 mit symbolisierter Darstellung der Handhabung zur Öffnung des Fixierriegels und Lösung der Gurtklemmung.
- Fig. 3: die Sicherheitseinrichtung zur Aufhebung der Federwirkung des Federrastgehemmes zur Verrastung des Fixierriegels am Kindersitz.
- Fig. 4: eine perspektivische Darstellung der Gurtführung mit Klemmfixierung bei in Offenstellung befindlichem Fixierriegel und lagepositioniert hinter dem Klammerschenkel einliegendem Gurt.
- Fig. 5: einen Querschnitt durch die geklemmte Gurtführung mit einliegendem Gurt, allerdings ohne Darstellung des den Klammerschenkel in Klemmstellung beaufschlagenden Fixierriegel.

Das erfindungsgemäße Kinderrückhaltesystem enthält einen Beckengurt 1 und einen Diagonalgurt 2. Diese halten einen Kindersitz 3 auf dem fahrzeugeigenen Sitz. Dazu ist beispielsweise der Diagonalgurt 2 in der Gurtführung 4 zugsicher auch in seiner Längsrichtung 5 fixiert.

Die Gurtführung enthält ein Beschlagteil 6 aus Kunststoff oder Metall. Es ist mittels Vemietung an einer Grundplatte 7 fixiert. Die Grundplatte 7 wiederum ist am äußeren Ende 8 der Kopfstütze 9 des Kindersitzes 3 angeordnet. Ein Klammerschenkel 11 geht in seinem Wurzelbereich einstückig in das Beschlagteil 6 über. Er überdeckt die Bettung 10, in die er unter Klemmung des Gurtes 2 eintauchbar ist.

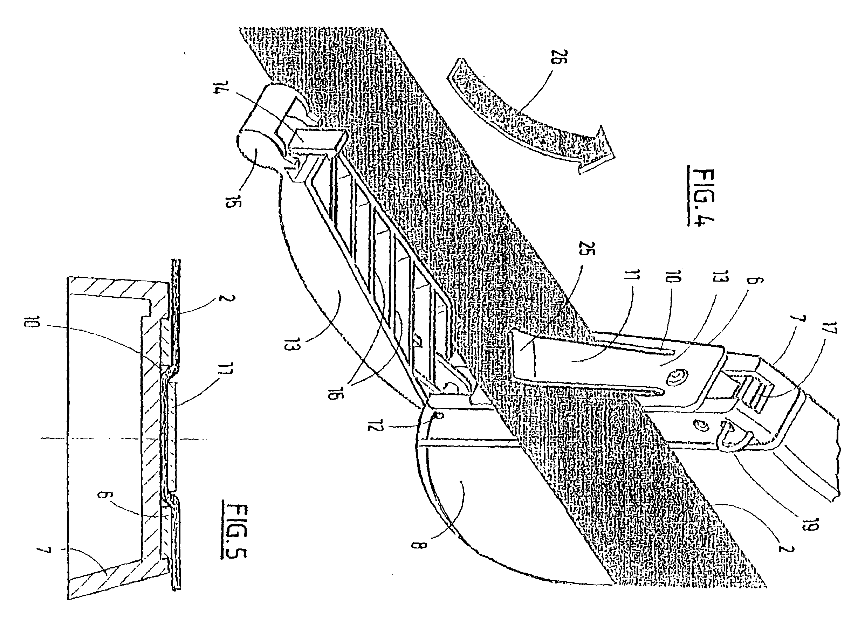

An der Schwenkachse 12 ist der Fixierriegel 13 schwenkbar an der Grundplatte 7 gelagert. Er ist in Fig.4 in seiner Offenstellung gezeigt. Der Fixierriegel 13 trägt an seinem freien Ende eine in Richtung auf die Grundplatte 7 vorstehende Rastnase 14 und ist im Rückenbereich der Rastnase 14 mit einer Grifflasche 15 versehen.

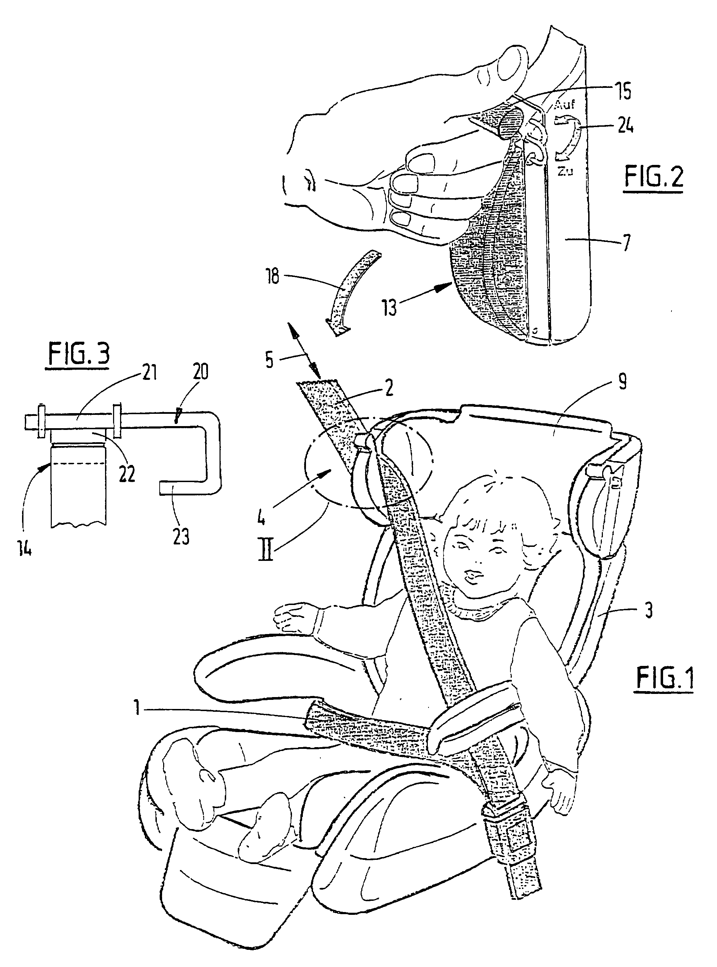

Zwischen der Schwenkachse 12 und der Rastnase 14 enthält der Fixierriegel 13 eine Druckfläche, die beim Ausführungsbeispiel wirkungsgleich durch mehrere Paralellrippen 16 gebildet ist, die gleichzeitig den als Kunststoffspritzteil ausgebildeten Fixierriegel 13 aussteifen. In Schließstellung (Fig.1 und 2) schnappt die Rastnase 14 in eine Rastöffnung 17 des Beschlagteil 7 federnd ein. Unter Überwindung des Federdrucks des Federrastgehemmes, genauer gesagt unter elastischer Ausbiegung der Rastnase 14, läßt sich die Schnappverbindung zwischen einwärts geschwenktem Fixierriegel 13 und der Grundplatte 7 von Hand lösen, wie dies grundsätzlich ohne die Notwendigkeit weiterer Erläuterungen aus Fig. 2 ersichtlich ist. Das Aufschwenken erfolgt in Pfeilrichtung 18 von Hand.

Die elastische Ausbiegbarkeit der Rastnase 14 aus ihrer Raststellung ist durch eine Sicherung 19 sperrbar. Die Sicherung 19 enthält einen um seine Längsachse drehbaren Sicherungsbügel 20 mit an dessen Welle 21 angeformtem Exzenter 22. Der Exzenter 22 beaufschlagt in Sicherungs-Drehstellung den Rücken der Rastnase 14, die dabei in Hintergriffstellung hinter der Rastausnehmung 17 gehalten ist. In dieser Stellung ist die zu einem Bügel gebogene Handhabe 23 des Sicherungshebels an der Grundplatte 7 form- oder kraftschlüssig in ihrer Drehstellung fixierbar. Die Drehung des Sicherungsbügels 20 zur Lösung der Sicherung ist in Fig. 2 anhand der Richtungspfeile 24 verdeutlicht.

Zur die gewünschte Längsfixierung herstellenden Klemmung des Gurtes 2 wird dieser bei geöffnetem Fixierriegel 13 hinter den vom Beschlagteil 6 mit seinem Freiende 25 abstehenden Klammerschenkel 11 eingeschoben und zunächst in stellung fixierbar. Die Drehung des Sicherungsbügels 20 zur Lösung der Sicherung ist in Fig. 2 anhand der Richtungspfeile 24 verdeutlicht.

Zur die gewünschte Längsfixierung herstellenden Klemmung des Gurtes 2 wird dieser bei geöffnetem Fixierriegel 13 hinter den vom Beschlagteil 6 mit seinem Freiende 25 abstehenden Klammerschenkel 11 eingeschoben und zunächst in dieser Weise gegenüber dem Beschlagteil 6, also dem Sitz 3 lagepositioniert. Das Einlegen erfolgt in der durch den Richtungspfeil 26 symbolisierten Richtung. Sodann wird der Fixierriegel im Uhrzeigersinn (Fig. 4) in seine Schließstellung geschwenkt, in der seine Rastnase 14 mit der Rastausnehmung 17 der Grundplatte 7 verrastet. In dieser Schließstellung beaufschlagt der Fixierriegel 13 über seine Druckfläche 16 den Rücken des Klammerschenkels 11, der dadurch in die Bettung 10 des Beschlagteils 6 unter Mitnahme des Gurtes 2 hineingedrückt wird. Dadurch erfährt der Gurt 2 im Bereich der Bettung 10 einen vierfach abgeknickten Längsverlauf, wie er aus Fig. 5 erkennbar ist. Die Rastverbindung zwischen Rastnase 14 und Rastausnehmung 17 kann dann durch die vorstehend beschriebene Sicherung 19 gesperrt werden, so daß das Federrastgehemme vom Kind selbst nicht mehr lösbar ist.

Zum Öffnen der Gurtfixierung und zur Gurtlösung wird zunächst die Sicherung 19 gelöst, so daß der Exzenter 22 die Rastnase 14 freigibt. Bei entsprechendem Zug an der Grifflasche 15 kommt die Rastnase 14 aus der Rastausnehmung 17 frei und es wird die aus Fig. 4 ersichtliche Öffnungsstellung des Fixierriegels 13 wieder hergestellt.

### Bezugszeichenliste

- 1: Beckengurt
- 2: Diagonalgurt
- 3: Kindersitz
- 4: Gurtführung
- 5: Längsrichtung
- 6: Beschlagteil
- 7: Grundplatte
- 8: äußeres Ende
- 9: Kopfstütze
- 10: Ausnehmung / Bettung
- 11: Klammerschenkel
- 12: Schwenkachse
- 13: Fixierriegel
- 14: Rastnase
- 15: Grifflasche
- 16: Parelleirippe
- 17: Rastöffnung
- 18: Pfeilrichtung
- 19: Sicherung
- 20: Sicherungsbügel
- 21: Welle
- 22: Exzenter
- 23: Handhabe
- 24: Richtungspfeil
- 25: Freiende
- 26: Richtungspfeil
- 27: Fixierrichtung
- 28: Querhaupt

## Patentansprüche

1. Autokindersitz zur Halterung auf einem Fahrzeugsitz mittels eines fahrzeugeigenen Sicherheitsgurtsystems, welches in Schließstellung den Kindersitz (3) mittels eines aufliegenden Gurtes (2) in Anlage an der Sitzfläche und/oder der Rücklehne des Fahrzeugsitzes hält,
wobei der Kindersitz (3) im Auflagebereich (6) des Gurtes (2) einen in einer quer zur Gurtlängsrichtung (5) verlaufenden Schwenkebene schwenkbaren Fixierriegel (13) enthält,
- der in seiner Schließ- bzw. Fixierstellung den Gurt (2) insbesondere unter mehrfacher Umlenkung seines Längsverlaufes (5) gegen seine Auflage klemmt,
**gekennzeichnet durch**
einen im Auflagebereich des Gurtes (2) als Positionierhilfe zusätzlich wirksamen, den Gurt (2) gegen seine Auflage beaufschlagenden Klammerschenkel (11), der vom Fixierriegel (13) in dessen Schließstellung überdeckt ist.

2. Autokindersitz nach Anspruch 1,
**dadurch gekennzeichnet,**
**daß** der Fixierriegel (13) in seiner Fixierstellung den Klammerschenkel (11) vollständig abdeckt.

3. Autokindersitz nach Anspruch 1 oder 2,
**dadurch gekennzeichnet,**
**daß** der Fixierriegel (13) in seiner Fixierstellung den Klammerschenkel (11) in Schließrichtung gegen seine Auflage beaufschlagt.

4. Autokindersitz nach Anspruch 3,
**dadurch gekennzeichnet,**
**daß** der Fixierriegel (13) in seiner Fixierstellung den Klammerschenkel (11) in eine quer zur Gurtlängsrichtung (5) verlaufende Bettung am Sitz (3) preßt.

5. Autokindersitz nach Anspruch 4,
**dadurch gekennzeichnet,**
**daß** der Klammerschenkel (11) und die ihn in Fixierstellung des Fixierriegels (13) aufnehmende Bettung Bestandteil eines einstückigen, am Fahrzeugsitz befestigten Beschlagteiles (6) sind.

6. Autokindersitz nach Anspruch 5,
**dadurch gekennzeichnet,**
**daß** das Beschlagteil (6) die Form etwa einer dreizinkigen Gabel bzw. eines W aufweist, deren bzw. dessen Mittelschenkel den Klammerschenkel bildet, der zur Einführung und Lagepositionierung des Gurtes (2) mit seinem freien Ende aus der Ebene der beiden Seitenschenkel nach oben vorsteht und in Fixierstellung vom Fixierriegel (13) gegen elastischen Rückstelldruck in den Zwischenraum zwischen den Seitenschenkeln eingetaucht wird (Fig. 5).

7. Autokindersitz nach Anspruch 6,
**dadurch gekennzeichnet,**
**daß** das freie Ende (25) des Klammerschenkels (11) zur Bildung eines Aufnahmemauls nach oben abgebogen ist.

8. Autokindersitz nach einem der vorhergehenden Ansprüche,
**dadurch gekennzeichnet,**
**daß** das den Klammerschenkel (11) enthaltende Beschlagteil (6) mit seinem die Schenkel tragenden Querhaupt (28) auf eine Grundplatte (7) oder auf die Sitzschale (8) direkt aufgesetzt, insbesondere aufgenietet ist.

9. Autokindersitz nach einem der vorhergehenden Ansprüche,
**dadurch gekennzeichnet,**
**daß** die Schwenkachse (12) des Fixierriegels (13) und das Querhaupt (28) des Beschlagteils (6) mit dem Lagerende des Klammerschenkels (11) auf unterschiedlichen Seiten neben dem Auflagebereich des Gurtes (2) positioniert sind.

10. Autokindersitz nach einem der vorhergehenden Ansprüche,
**dadurch gekennzeichnet,**
**daß** der Fixierriegel (13) an seinem der Schwenkachse (12) abgewandten Schwenkende eine mit einer Rastöffnung (17) am Kindersitz (3) korrespondierende Rastnase (14) enthält und zwischen Schwenkachse (12) und Rastnase (14) eine den Klammerschenkel (11) in Eintauchrichtung beaufschlagende Druckfläche enthält.

11. Autokindersitz nach Anspruch 10,
**dadurch gekennzeichnet,**
**daß** die Druckfläche durch den Fixierriegel aussteifende Querrippen (16) gebildet ist.

12. Autokindersitz nach einem oder mehreren der vorhergehenden Ansprüche,
**dadurch gekennzeichnet,**
**daß** der Fixierriegel (13) ein aus Kunststoff gespritztes Formteil ist.

13. Autokindersitz nach Anspruch 10,
**dadurch gekennzeichnet,**
**daß** die Rastnase (14) des Fixierriegels (13) nach Art eines Federrastgesperres oder -gehemmes in Schließ- bzw. Klemmstellung die Rastöffnung (17) am Kindersitz (3) hintergreift.

14. Autokindersitz nach einem oder mehreren der vorhergehenden Ansprüche,
**gekennzeichnet durch**
eine am freien Schwenkende des Fixierriegels (13) angeordnete Grifflasche (15) zur Entrastung des Federrastgesperres.

15. Autokindersitz nach einem der Ansprüche 10 bis 14,
**dadurch gekennzeichnet,**
**daß** die Rastnase (14) und der Fixierriegel (13) einstückig aus Kunststoff gefertigt und aus ihrer Raststellung elastisch auslenkbar sind.

16. Autokindersitz nach einem der Ansprüche 10 bis 15,
**gekennzeichnet durch**
eine die Rastnase (14) in Raststellung derart von ihrer Rückenseite her beaufschlagende Sicherungseinrichtung, daß die elastische Ausbiegbarkeit der Rastnase (14) zur Öffnung des Federrastgesperres unterbunden ist.

17. Autokindersitz nach Anspruch 16,
**dadurch gekennzeichnet,**
**daß** die Sicherungseinrichtung eine an ihrem Umfang einen Exzenter (22) tragende drehbare Welle (21) enthält, welche Welle (21) durch eine außerhalb des Sitzes (3) angeformte Handhabe (23) zu einem Sicherungsbügel (20) ausgeformt ist.

18. Autokindersitz nach einem oder mehreren der vorhergehenden Ansprüche,
**dadurch gekennzeichnet,**
**daß** der Fixierriegel (13) an einer das Beschlagteil (6) mit der Bettung (10) und dem Klammerschenkel (11) tragenden Grundplatte (7) schwenkbar gelagert ist, die die Rastöffnung (17) zur Aufnahme der Rastnase (14) enthält und am Kindersitz (3) fixiert ist.

## Claims

1. Child's car seat for securing on a vehicle seat by means of a vehicle safety-belt system which, in the closed position, retains the child seat (3) in abutment against the seat surface and/or the backrest of the vehicle seat by means of a belt (2) bearing on the child seat, the child seat (3) containing, in the bearing region (6) of the belt (2), a fixing bar (13) which can be pivoted in a pivoting plane running transversely to the longitudinal direction (5) of the belt and, in its closed or fixing position, clamps the belt (2) against its bearing means, in particular with the longitudinal extent (5) of the belt being deflected a number of times, **characterized by** a clip leg (11) which is additionally active as a positioning aid in the bearing region of the belt (2), forces the belt (2) against its bearing means and is covered over by the fixing bar (13) in the closed position of the latter.

2. Child's car seat according to Claim 1, **characterized in that**, in its fixing position, the fixing bar (13) completely covers the clip leg (11).

3. Child's car seat according to Claim 1 or 2, **characterized in that**, in its fixing position, the fixing bar (13) forces the clip leg (11) in the closing direction against its bearing means.

4. Child's car seat according to Claim 3, **characterized in that**, in its fixing position, the fixing bar (13) presses the clip leg (11) into a support on the seat (3), said support running transversely to the longitudinal direction (5) of the belt.

5. Child's car seat according to Claim 4, **characterized in that** the clip leg (11) and the support accommodating it in the fixing position of the fixing bar (13) are constituent parts of a single-piece fitting part (6) fastened on the vehicle seat.

6. Child's car seat according to Claim 5, **characterized in that** the fitting part (6) is approximately in the form of a three-pronged fork or of a W, of which the central leg forms the clip leg which, for the purposes of introducing and positioning the belt (2), has its free end projecting upwards out of the plane of the two side legs and which, in the fixing position of the fixing bar (13), penetrates, counter to elastic restoring pressure, into the interspace between the side legs (Figure 5).

7. Child's car seat according to Claim 6, **characterized in that** the free end (25) of the clip leg (11) is bent upwards in order to form an accommodating mouth.

8. Child's car seat according to one of the preceding claims, **characterized in that** the fitting part (6), which contains the clip leg (11), has its crossbar (28), which bears the legs, positioned directly on, in particular riveted onto, a base plate (7) or the seat shell (8).

9. Child's car seat according to one of the preceding claims, **characterized in that** the pivot pin (12) of the fixing bar (13) and the crossbar (28) of the fitting part (6), with the bearing end of the clip leg (11), are positioned on different sides alongside the bearing region of the belt (2).

10. Child's car seat according to one of the preceding claims, **characterized in that** at its pivoting end, which is directed away from the pivot pin (12), the fixing bar (13) contains a latching nose (14), corresponding with a latching opening (17) on the child seat (3), and, between the pivot pin (12) and latching nose (14), contains a pressure-exerting surface which forces the clip leg (11) in the direction of penetration.

11. Child's car seat according to Claim 10, **characterized in that** the pressure-exerting surface is formed by transverse ribs (16) which stiffen the fixing bar.

12. Child's car seat according to one or more of the preceding claims, **characterized in that** the fixing bar (13) is a moulding injection moulded from plastic.

13. Child's car seat according to Claim 10, **characterized in that**, in the closed or clamping position, the latching nose (14) of the fixing bar (13) engages behind the latching opening (17) on the child seat (3) in the manner of a resilient ratchet or catch mechanism.

14. Child's car seat according to one or more of the preceding claims, **characterized by** a grip lug (15) which is arranged at the free pivoting end of the fixing bar (13) and is intended for unlatching the resilient ratchet mechanism.

15. Child's car seat according to one of Claims 10 to 14, **characterized in that** the latching nose (14) and the fixing bar (13) are produced in one piece from plastic and can be deflected elastically out of their latching position.

16. Child's car seat according to one of Claims 10 to 15, **characterized by** a securing device which forces the latching nose (14) into the latching position from its rear side so as to eliminate the capability of the latching nose (14) bending out elastically in order to open the resilient ratchet mechanism.

17. Child's car seat according to Claim 16, **characterized in that** the securing device contains a rotatable shaft (21) which bears an eccentric (22) on its circumference and, by means of a handle (23) integrally formed on it outside the seat (3), is formed into a securing bracket (20).

18. Child's car seat according to one or more of the preceding claims, **characterized in that** the fixing bar (13) is mounted pivotably on a base plate (7) which bears the fitting part (6) with the support (10) and the clip leg (11), contains the latching opening (17) for accommodating the latching nose (14), and is fixed on the child seat (3).

## Revendications

1. Siège de voiture pour enfant, destiné à être retenu sur un siège de véhicule au moyen d'un système de ceinture de sécurité propre au véhicule qui, en position fermée, retient le siège pour enfant (3) au moyen d'une ceinture (2) appliquée en appui sur la surface d'assise et/ou sur le dossier du siège de véhicule,
dans lequel le siège pour enfant (3) comprend dans la région d'application (6) de la ceinture (2) un verrou de fixation (13) pivotable dans un plan de pivotement s'étendant transversalement à la direction longitudinale de ceinture (5),
- lequel verrou, dans sa position de fermeture et de fixation respective, serre contre son support la ceinture (2) en particulier en déviant plusieurs fois son tracé longitudinal (5),
**caractérisé par** une branche de pince (11) sollicitant la ceinture (2) contre son support et agissant additionnellement comme aide de positionnement dans la région d'application de la ceinture (2), ladite branche de pince étant recouverte par le verrou de fixation (13) dans la position de fermeture de celui-ci.

2. Siège de voiture pour enfant selon la revendication 1, **caractérisé en ce que** dans sa position de fixation, le verrou de fixation (13) recouvre totalement la branche de pince (11).

3. Siège de voiture pour enfant selon l'une ou l'autre des revendications 1 et 2, **caractérisé en ce que** dans sa position de fixation, le verrou de fixation (13) sollicite la branche de pince (11) contre son support.

4. Siège de voiture pour enfant selon la revendication 3, **caractérisé en ce que** dans sa position de fixation, le verrou de fixation (13) presse la branche de pince (11) dans un logement ménagé sur le siège (3), qui s'étend transversalement à la direction longitudinale de ceinture (5).

5. Siège de voiture pour enfant selon la revendication 3, **caractérisé en ce que** la branche de pince (11) et le logement qui la reçoit en position de fixation du verrou de fixation (13) font partie d'une ferrure (6) réalisée d'un seul tenant et fixée sur le siège de véhicule.

6. Siège de voiture pour enfant selon la revendication 5, **caractérisé en ce que** la ferrure (6) présente approximativement la forme d'une fourche à trois dents ou d'un W, dont la branche médiane forme la branche de pince qui, pour introduire et positionner la ceinture (2) fait saillie vers le haut avec son extrémité libre hors du plan des deux branches latérales et qui, en position de fixation, est plongée par le verrou de fixation (13) à l'encontre d'une pression de rappel élastique, jusque dans l'espace situé entre les branches latérales (figure 5).

7. Siège de voiture pour enfant selon la revendication 6, **caractérisé en ce que** l'extrémité libre (25) de la branche de pince (11) est repliée vers le haut pour former une embouchure de réception.

8. Siège de voiture pour enfant selon l'une quelconque des revendications précédentes, **caractérisé en ce qu'**avec son entretoise (28) portant les branches, la ferrure (6) contenant la branche de pince (11) est placée directement, en particulier rivée sur une plaque de base (7) ou sur la coque de siège (8).

9. Siège de voiture pour enfant selon l'une quelconque des revendications précédentes, **caractérisé en ce que** l'axe de pivotement (12) du verrou de fixation (13) et l'entretoise (28) de la ferrure (6) sont positionnés avec l'extrémité de montage de la branche de pince (11) sur différents côtés, à côté de la région d'application de la ceinture (2).

10. Siège de voiture pour enfant selon l'une quelconque des revendications précédentes, **caractérisé en ce que** sur son extrémité pivotante détournée de l'axe de pivotement (12), le verrou de fixation (13) contient un ergot d'enclenchement (14) correspondant à une ouverture d'enclenchement (17) ménagée sur le siège pour enfant (3), et entre l'axe de pivotement (12) et l'ergot d'enclenchement (14), il contient une surface de pression sollicitant la branche de pince (11) en direction de plongée.

11. Siège de voiture pour enfant selon la revendication 10, **caractérisé en ce que** la surface de pression est formée par des nervures transversales (16) raidissant le verrou de fixation.

12. Siège de voiture pour enfant selon l'une quelconque des revendications précédentes, **caractérisé en ce que** le verrou de fixation (13) est une pièce en matière plastique moulée par injection.

13. Siège de voiture pour enfant selon la revendication 10, **caractérisé en ce qu'**en position de fermeture et de serrage, respectivement, l'ergot d'enclenchement (14) du verrou de fixation (13) engage par l'arrière l'ouverture d'enclenchement (17) sur le siège pour enfant (3), à la manière d'un mécanisme d'enclenchement à ressort.

14. Siège de voiture pour enfant selon l'une quelconque des revendications précédentes, **caractérisé par** une patte de saisie (15) agencée à l'extrémité de pivotement libre du verrou de fixation (13) pour déverrouiller le mécanisme d'enclenchement à ressort.

15. Siège de voiture pour enfant selon l'une quelconque des revendications 10 à 14, **caractérisé en ce que** l'ergot d'enclenchement (14) et le verrou de fixation (13) sont réalisés d'un seul tenant en matière plastique et peuvent être sortis élastiquement hors de leur position d'enclenchement.

16. Siège de voiture pour enfant selon l'une quelconque des revendications 10 à 15, **caractérisé par** un dispositif de sécurité sollicitant l'ergot d'enclenchement (14) dans la position d'enclenchement depuis sa face postérieure de telle sorte que la capacité de l'ergot d'enclenchement (14) de fléchir élastiquement pour ouvrir le mécanisme d'enclenchement à ressort est inhibée.

17. Siège de voiture pour enfant selon la revendication 16, **caractérisé en ce que** le dispositif de sécurité comporte un axe (21) rotatif portant sur sa périphérie un excentrique (22), lequel axe (21) est conformé en un étrier de sécurité (20) par une manette (23) moulée à l'extérieur du siège (3).

18. Siège de voiture pour enfant selon l'une ou plusieurs des revendications précédentes, **caractérisé en ce que** le verrou de fixation (13) est monté à pivotement sur une plaque de base (7) portant la ferrure (6) avec le logement (10) et la branche de pince (11), laquelle plaque de base contient l'ouverture d'enclenchement (17) pour recevoir l'ergot d'enclenchement (14) et est fixée sur le siège pour enfant (3).
